# EUROPÄISCHE PATENTSCHRIFT

(11) **EP 2 516 267 B1**
(45) Veröffentlichungstag und Bekanntmachung des Hinweises auf die Patenterteilung: **29.04.2015**
(21) Anmeldenummer: 10807322.2
(22) Anmeldetag: 21.12.2010
(51) Int. Cl.: B60T 8/17, B60T 7/18, B64C 25/50

(54) **STEUERVORRICHTUNG FÜR FLUGZEUGE**
CONTROL DEVICE FOR AIRCRAFT
DISPOSITIF DE COMMANDE POUR AVIONS

(30) Priorität: 23.12.2009 DE 102009060561
(43) Veröffentlichungstag der Anmeldung: 31.10.2012
(73) Patentinhaber: Deutsches Zentrum für Luft- und Raumfahrt e.V., 51147 Köln (DE); Meißner, Ute Marita, 50996 Köln (DE)
(72) Erfinder: MEIßNER, Ute, Marita, 50996 Köln (DE); HAHN, Klaus-Uwe, 38176 Wendeburg (DE)
(74) Vertreter: Aisch, Sebastian
(86) Internationale Anmeldenummer: PCT/EP2010/007809
(87) Internationale Veröffentlichungsnummer: WO 2011/079923

(56) Entgegenhaltungen:
- US-A- 2 502 522
- US-A- 3 208 694
- US-A- 3 761 691
- US-A1- 2009 150 010
- US-B1- 6 722 610

## Beschreibung

Die Erfindung betrifft eine Steuervorrichtung für Flugzeuge umfassend mindestens ein an einem Flugzeug angeordnetes Flugzeugfahrwerk, das ein oder mehrere Fahrwerksräder aufweist, und einen mit dem Flugzeugfahrwerk zusammenwirkenden Steuermechanismus, der zum Drehen der Fahrwerksräder gegenüber der Längsachse des Flugzeuges eingerichtet ist.

In der Luftfahrt ist die Start- und Landephase eines Flugzeuges der sicherheitskritischste Teil eines Fluges, da insbesondere große Fracht- und Passagierflugzeuge nur auf dafür entsprechend vorgesehenen Flächen (Landebahn) starten oder landen können und aufgrund der Nähe des Flugzeuges zum Boden insbesondere während des Landevorgangs eine erhöhte Gefahr des ungewollten Bodenkontaktes und somit ein erhöhtes Unfallrisiko besteht. Bei der Start- und Landephase müssen die Bewegungsrichtungen des Flugzeuges gegenüber dem Boden (Rollen auf der Start- und Landebahn, Bodengeschwindigkeit ("Ground Speed") oder inertialer Geschwindigkeits-Vektor mit der Bewegung des Flugzeuges gegenüber der Luft (Luftgeschwindigkeit ("Air Speed" / oder Flugwind-Vektor) ineinander überführt werden. Dieser Vorgang führt bei Seitenwind zu einem erhöhten Unfallrisiko.

Damit Flugzeuge auch bei starkem Seitenwinden sicher und komfortabel landen können, gibt es im Wesentlichen zwei verschiedene Landeverfahren, die die Piloten beherrschen müssen. Dabei handelt es sich zum einen um die De-Crab-Methode und zum anderen um die Sideslip-Methode. Bei der De-Crab-Methode landet das Flugzeug aerodynamisch zum Wind ausgerichtet mit einem Vorhaltewinkel, d.h. die Längsachse des Flugzeuges (allgemein gesprochen auch als die Nase des Flugzeuges) wird in Windrichtung ausgerichtet, so dass aufgrund der Eigengeschwindigkeit des Flugzeuges und dem Vorhaltewinkel die Abdrift durch den Seitenwind kompensiert wird. Kurz vor oder kurz nach dem Aufsetzen, je nach Airline oder Betreiber, richtet der Pilot mit einem Manöver das Flugzeug längs zur Landebahn aus, damit das Flugzeug nach dem Aufsetzen während des Ausrollvorgangs bzw. Ausrollphase auf der Landebahn verbleibt. Dieses Manöver erfordert dabei viel Erfahrung von dem Piloten und kann den Ausrollvorgang des Flugzeuges auf der Landebahn destabilisieren, wobei bei unsachgemäßer Anwendung der De-Crab-Methode erhebliche Kräfte auf das Bug- oder Hauptfahrwerk wirken, insbesondere Querkräfte, die zur Gewährleistung der erforderlichen Sicherheit eine entsprechend starke Dimensionierung der Fahrwerke erforderlich machen, wodurch sich ein großes Fahrwerksgewicht ergibt.

Bei der Sideslip-Methode handelt es sich um ein Landeverfahren bei Seitenwind, bei der der Pilot mit dem Querruder das Flugzeug in Richtung des Windes steuert, so dass die Tragfläche zum Wind "hängen gelassen" wird. Damit das Flugzeug nicht durch den Querruderausschlag in den Wind dreht, steuert der Pilot mit dem Seitenruder gegen und hält das Flugzeug weiterhin auf Kurs längs der Landebahn, so dass aufgrund dessen dieser Zustand auch als "gekreuzte Ruder" bezeichnet wird. Durch das Hängenlassen der zum Wind geneigten Tragflächen wird die Abdrift aufgrund des Seitenwindes kompensiert, so dass eine Landung ohne Vorhaltewinkel möglich wird. Nachteilig bei dieser Methode ist insbesondere die Tatsache, dass bei sehr starken Seitenwinden und somit einer sehr starken hängenden Tragfläche das Risiko besteht, dass während des Aufsetzens des Flugzeugs auf der Landebahn die hängende Tragfläche (bzw. das unter der Tragfläche angebrachte Triebwerk) den Boden berührt, was zu schweren Unfällen führen kann. Bei einem Landeanflug dürften keine Hängewinkel von mehr als 5 ° eingestellt werden, damit es nicht zu einer Berührung der Flügelspitzen mit der Landebahn kommt.

Um die Nachteile bei der De-Crab-Methode auszugleichen, nämlich die erhöhten Querkräfte während des Aufsetzens, beschreibt die U.S. 6,722,610 B1 ein spezielles drehbares Flugzeugfahrwerk, bei dem jedes einzelne Rad des Fahrwerks bzw. der kompletten Fahrwerksanlage des Flugzeuges separat um die Längsachse geschwenkt werden kann (Drehachse ist Gierachse), um so den Vorhaltewinkel während der Landung nach der De-Crab-Methode (sogenannter Crabwinkel) durch Drehen der Räder parallel zur Bewegungsrichtung des Flugzeugs über Grund auszugleichen. Dazu wird anhand der tatsächlichen Bewegungsrichtung des Flugzeuges über Grund die Richtung der Längsachse, die bei der De-Crab-Methode von der Bewegungsrichtung abweicht, ermittelt, wobei sich aus der Differenz zwischen tatsächlicher Bewegungsrichtung des Flugzeuges über Grund und Richtung der Längsachse der Crabwinkel ergibt. Um genau diesen Crabwinkel wird nun jedes der Räder des Flugzeuges über der Längsachse gedreht, so dass die Laufrichtung der Räder parallel bzw. in Richtung der Bewegung des Flugzeuges über Grund ausgerichtet ist.

Daher wirken auf das Fahrwerk keine anderen Kräfte als die, die auch bei einer normalen Landung ohne De-Crab-Methode auftreten würden, da die Räder in die Bewegungsrichtung des Flugzeuges ausgerichtet sind. Nachteilig dabei ist jedoch insbesondere die Tatsache, dass durch spontane Änderungen der Windrichtung oder Windstärke der Aufsetzpunkt des Flugzeuges auf der Landebahn verschoben sein kann, so dass das Flugzeug nicht genau mittig auf der Landebahn aufsetzt, was letztlich das Unfallrisiko erhöht, was bis hin zu einem Verlassen der Landebahn führen kann.

Aus der US 6,722,610 B1, der nächstliegenden Stand der Technik, ist ein Verfahren und eine Vorrichtung für Flugzeuge bekannt, bei dem das Fahrwerk über einen Lenkmechanismus mit einer Steuereinheit verbunden ist, so dass während der Landephase das Fahrwerk einen möglichen "Crap-Winkel" aufgrund von starkem Seitewind ausgleichen kann.

Aus der US 3,208,694 ist ein Vorderrad für Flugobjekte bekannt, das ebenfalls lenkbar ist.

Aus der US 3,761,691 ist des Weiteren ein Landekontrollsystem für Flugzeuge bekannt, das ein laterales Beschleunigungssignal bei Seitenwindlandungen zum Steuern der Fahrwerke verwendet.

Aus der US 2,502,522 ist ebenfalls ein lenkbares Fahrwerk für Flugobjekte bekannt. Eine ähnliche Vorrichtung auch aus der US 2009/0150010 A1 bekannt, bei der ein lenkbares Fahrwerk für den Taxiweg vorgeschlagen wird.

Aufgabe der vorliegenden Erfindung ist es somit, eine Vorrichtung anzugeben, mit der ein Flugzeug während der Start- oder Landephase auch bei Anwendung der De-Crab-Methode sicher geführt werden kann.

Die Aufgabe wird mit der Steuervorrichtung der eingangs genannten Art erfindungsgemäß dadurch gelöst, dass die Steuereinheit eine Ausrichteinheit hat, die mit dem Steuermechanismus verbunden und zur Steuerung der Bewegung der Fahrwerksräder mittels des Steuermechanismus während der Lande- oder Startphase des Flugzeuges derart eingerichtet ist, dass die Laufrichtung der

Fahrwerksräder in Richtung eines Fixpunktes ausgerichtet sind.

So werden beispielsweise bei der De-Crab-Methode, bei der die Längsachse des Flugzeuges in Windrichtung gedreht ist, die Räder nicht um den sogenannten Crabwinkel in die Bewegungsrichtung des Flugzeuges über Grund gedreht, sondern die Laufrichtung der Fahrwerksräder werden in Richtung eines Fixpunktes ausgerichtet, der vorteilhafterweise am Ende der Start- oder Landebahn mittig angenommen werden kann. Setzt das Flugzeug somit nicht hundertprozentig mittig der Landebahn auf, so wird aufgrund der Ausrichtung der Fahrwerksräder das Flugzeug kurz nach dem Aufsetzen sofort in Richtung des angenommenen Fixpunktes geführt, so dass das Flugzeug am Ende des Ausrollvorgangs (vor Beginn des Taxiweges) sich mittig der Landebahn befindet.

Der Fixpunkt kann ein relativ zur Landebahn feststehender Fixpunkt oder bevorzugt ein um einen Kompensationswinkel unterhalb des relativ zur Landebahn feststehenden Fixpunktes liegender korrigierter Fixpunkt sein.

Um entsprechende Querkräfte zu vermeiden, die z. B. bei zwei parallel zur Flugzeuglängsachse angeordneten Fahrwerken entstehen können, die als Hauptfahrwerk ausgebildet sind, werden die Fahrwerksräder dieser Fahrwerke so auf den feststehenden oder korrigierten Fixpunkt ausgerichtet, dass alle auf den feststehenden oder korrigierten Fixpunkt ausgerichteten Fahrwerksräder parallel ausgerichtet sind.

Am Ende des Ausrollvorgangs, wenn das Flugzeug aufgrund der erfindungsgemäßen Steuervorrichtung trotz des Vorhaltewinkels mittig auf der Landebahn am Fixpunkt angekommen ist, ist es besonders vorteilhaft, wenn die Ausrichteinheit während des Ausrollvorgangs bzw. Abbremsvorgangs die Räder der Fahrwerksanlage so dreht, dass sie am Ende des Ausrollvorgangs parallel zur Längsachse des Flugzeuges ausgerichtet sind, d.h. der während der Landung beibehaltene Crap- bzw. Vorhaltewinkel wird während des Ausrollens durch die entsprechende Drehung der Flugzeuglängsachse auf den Kompensationswinkel reduziert.

Unter der Landephase im Sinne der vorliegenden Erfindung wird dabei der Zeitraum vom Landeanflug an bis zum Ende des Ausrollens auf der Landebahn verstanden. Dies beinhaltet somit sowohl den Anflug kurz vor dem Aufsetzen auf die Landebahn, den Moment des Aufsetzens sowie das Ausrollen und Abbremsen des Flugzeuges bis hin zum Beginn des Taxiweges.

Während der genannten Landephase ist es daher ganz besonders vorteilhaft, wenn die Steuervorrichtung kontinuierlich die Fahrwerksräder auf den Fixpunkt, insbesondere auf den um den Kompensationswinkel unterhalb des unkorrigierten Fixpunktes liegenden korrigierten Fixpunkt, ausrichtet, so dass auch kleinere Abweichungen, die durch spontane Veränderungen der Wind- und Wetterverhältnisse entstehen können, sofort ausgeglichen werden können.

Um auch bei älteren Flugzeugtypen die erfindungsgemäße Steuervorrichtung einfach nach rüsten zu können, ist es besonders vorteilhaft, wenn die Vorrichtung mit einer Drehmomentstütze mechanisch zusammenwirkt, wobei die Drehmomentstütze die mechanische Verbindung zwischen dem Flugzeug und dem unteren Teil des Federbeins des Fahrwerkes ist. Das Federbein, an dessen unteren Ende die entsprechenden Fahrwerksräder angeordnet sind, wird dann mittels des Steuermechanismus an der Drehmomentstütze gedreht, so dass sich die Laufrichtung der Fahrwerksräder gegenüber der Längsachse des Flugzeuges verschwenken. In dieser vorteilhaften Ausgestaltung werden somit alle Fahrwerksräder, die an einem Federbein angeordnet sind, zusammen mit diesem Federbein gemeinschaftlich gedreht. Dies beinhaltet auch die Möglichkeit der Drehung des kompletten Radsatzes mit einem Teil des Federbeins relativ zum verbleibenden Teil des Federbeins. Denkbar ist auch die Drehung einzelner Fahrwerksräder relativ zu ihrer jeweiligen Aufhängung.

Um das Flugzeug sofort nach dem Aufsetzen der Fahrwerksräder auf der Landebahn in Richtung des Fixpunktes bzw. des um den Kompensationswinkel unterhalb des unkorrigierten Fixpunktes liegenden korrigierten Fixpunktes zu führen, ist die Ausrichteinheit zur Ermittlung der Lage des Fixpunktes relativ zur Längsachse des Flugzeuges ausgebildet. Dies ist dann besonders vorteilhaft, wenn das Flugzeug aufgrund von starkem Seitenwind mit einem Vorhaltewinkel landen will und sich somit die Bewegungsrichtung von der Richtung der Längsachse unterscheidet. Somit wird von der Ausrichteinheit der Winkel zwischen der Längsachse des Flugzeuges und der Richtung des Fixpunktes ermittelt, so dass in Abhängigkeit dieser relativen Lage des Fixpunktes die Fahrwerksräder entsprechend gedreht und auf den Fixpunkt bzw. den um den Kompensationswinkel unterhalb des unkorrigierten Fixpunktes liegenden korrigierten Fixpunkt ausgerichtet werden können. Ganz besonders vorteilhaft ist es hierbei, wenn die Steuervorrichtung eine Signalerfassungseinrichtung hat, mit der ein elektromagnetisches Signal, welches den Fixpunkt, auf den die Räder ausgerichtet werden sollen, markiert, erfasst werden kann. Ein solches elektromagnetisches Signal kann beispielsweise das Signal des "Instrument Landing System" (ILS) sein, wobei der Sender des ILS-Signals auf der Center Line hinter der Landebahn steht und kontinuierlich die Mitte der Landebahn markiert. In Abhängigkeit dieser elektromagnetischen Signale, die vom ILS ausgesendet werden, lässt sich somit die Lage des Fixpunktes ermitteln, so dass die Fahrwerksräder entsprechend auf den Fixpunkt bzw. auf den um den Kompensationswinkel unterhalb des unkorrigierten Fixpunktes liegenden korrigierten Fixpunkt ausgerichtet werden können.

Darüber hinaus ist es auch denkbar, dass die Steuervorrichtung eine hoch genaue Positionsermittlungseinheit hat, mit der die Position des Flugzeuges hoch genau bestimmt werden kann. Ein solches hoch genaues Positionsermittlungssystem kann beispielsweise ein D-GPS-System sein in Verbindung mit einem inertialen Messsystem, welches entsprechende Beschleunigungskräfte detektiert und somit die Ausrichtung der Längsachse des Flugzeuges detektieren kann. Damit lässt sich ebenfalls rein rechnerisch die Lage des Fixpunktes, deren Position beispielsweise durch eine hoch genaue GPS-Position angegeben werden kann, ermitteln.

Denkbar ist aber auch, dass die Ausrichteinheit alle Fahrwerksräder der kompletten Fahrwerksanlage des Flugzeuges (Bugfahrwerk und Hauptfahrwerk) in Richtung des Fixpunktes bzw. des um den Kompensationswinkel unterhalb des unkorrigierten Fixpunktes liegenden korrigierten Fixpunktes ausrichtet und somit jedes Fahrwerksrad an der Führung in Richtung Fixpunkt teilnimmt. Das Bugfahrwerk muss dabei selbstverständlich so ausgelegt sein, dass es die entsprechenden Querkräfte ohne Schaden aufnehmen kann.

Die Erfindung wird anhand der beigefügten Zeichnungen beispielhaft erläutert.

Es zeigen:
- Fig. 1 -: schematische Darstellung einer Landung nach der De-Crab-Methode (Stand der Technik);
- Fig. 2 -: schematische Darstellung eines Blockschaltbilds der vorliegenden Steuervorrichtung;
- Fig. 3 + 4 -: schematische Darstellungen einer Landung mittels der vorliegenden Steuervorrichtung

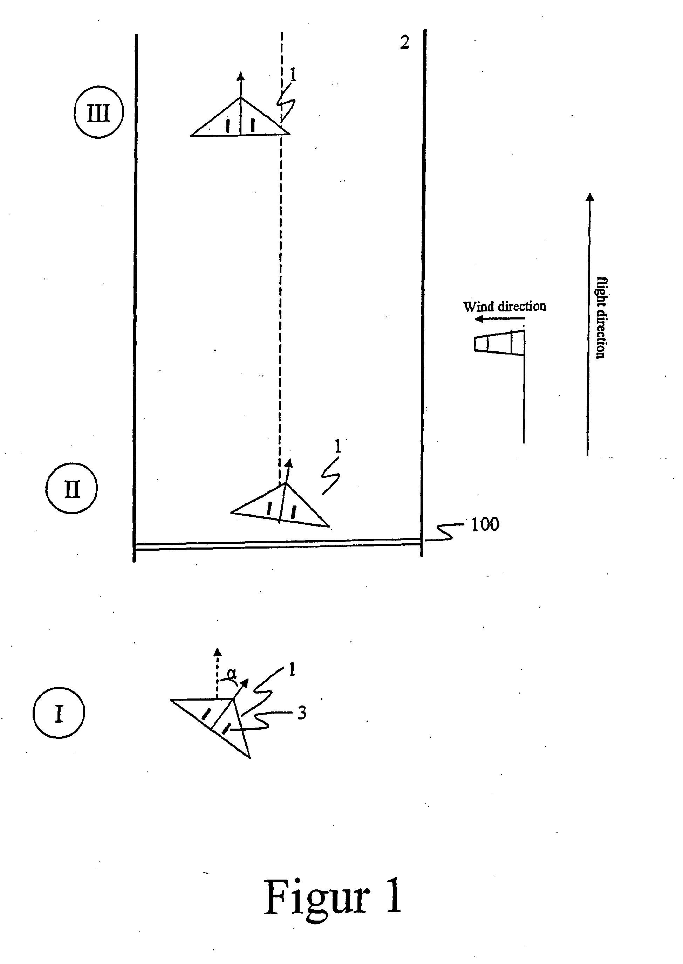

Fig. 1 zeigt schematisch eine Landung nach der De-Crab-Methode, wie sie aus dem Stand der Technik hinreichend bekannt ist. Dabei wird der Einfachheit halber die Landephase in drei Unterabschnitte I, II und III unterteilt, wobei I die Anflugphase an die Landebahnschwelle 100 darstellt, II die Phase kurz vor oder kurz nach dem Aufsetzen des Flugzeuges 1 auf der Landebahn 2 und III bezeichnet die Phase des Ausrollens des Flugzeuges 1 bis zum Ende der Landebahn und Beginn des Taxiweges.

Wie in Fig. 1 zu erkennen ist, folgt die Landung während einem sehr starken Seitenwind, wobei man in der fliegerischen Praxis erst bei einer Stärke von ca. 10 bis 25 Knoten (ca. 18 bis 46 km/h) von einer Seitenwindlandung spricht.

Aufgrund des Seitenwindes, der im vorliegenden Beispiel von rechts nach links weht, kann der Pilot die Landebahn nicht normal ausgerichtet anfliegen, da sonst aufgrund des Seitenwindes das Flugzeug 1 von der Landebahn abgetrieben werden würde. Aus diesem Grund ist bereits in der Anflugphase I die Maschine in Windrichtung eingedreht, um so die Abdrift aufgrund des Seitenwindes zu kompensieren. Dieser Vorhaltewinkel, auch Crapwinkel α genannt, ergibt sich dabei aus dem Verhältnis von Fluggeschwindigkeit gegenüber der Luft, Flugrichtung, Windrichtung und Windstärke. Im vorliegenden Beispiel der Fig. 1 beträgt der Crapwinkel z. B. ungefähr 45 Grad, so dass der exakt 90 Grad anliegenden Seitenwind und die daraus resultierende Abdrift kompensiert wird. Die vektorielle Addition des Fluggeschwindigkeitsvektors gegenüber der Luft plus Windvektor gegenüber der Erde ergeben den Fluggeschwindigkeitsvektor gegenüber der Erde. Das heißt, bei einem vorgegebenen Betrag der Anfluggeschwindigkeit gegenüber der Luft muss die Richtung der Fluggeschwindigkeit gegenüber der Luft so gewählt werden, dass sich zusammen mit dem Windvektor die gewünschte Flugrichtung über Grund ergibt. Wie in diesem Beispiel weiterhin zu erkennen ist, sind alle Fahrwerksräder 3 des Flugzeuges 1 starr und somit parallel zur Längsachse des Flugzeuges 1 ausgerichtet.

Kurz vor dem Aufsetzen des Flugzeuges 1 in Phase II auf der Landebahn 2 muss die Maschine wieder parallel zur Flugrichtung über Grund (Track) bzw. parallel zur Landebahn ausgerichtet werden, um unnötig große Querkräfte an den Fahrwerksrädern 3 zu vermeiden. Denn würde die Maschine 1 mitsamt dem Vorhaltewinkel α auf der Landebahn aufsetzen, so ergäbe sich aufgrund der Bewegungsrichtung und der Verschiebung der Längsachse um den Winkel α an den Fahrwerksrädern große Querkräfte, die zu extremen Belastungen des Fahrwerks und zu extremen Seitenbeschleunigungen bei den Passagieren führen würden. Aus diesem Grund ist es extrem wichtig, dass kurz vor dem Aufsetzen die Maschine wieder parallel zur Flugrichtung über Grund eingeschwenkt wird und der Vorhaltewinkel α somit gegen 0 geht. In der fliegerischen Praxis ist dies der kritischste Moment bei einer Seitenwindlandung.

Nach dem Aufsetzen in Phase II folgt die Ausrollphase III, in der das Flugzeug auf die für den Taxiweg beschränkte Geschwindigkeit heruntergebremst wird.

Wie in dem Beispiel der Fig. 1 gut zu erkennen ist, gelingt es nicht immer, die Maschine aufgrund des vorherrschenden Seitenwindes exakt auf der Landebahnmitte aufzusetzen, was unter Umständen ein Sicherheitsrisiko darstellen könnte.

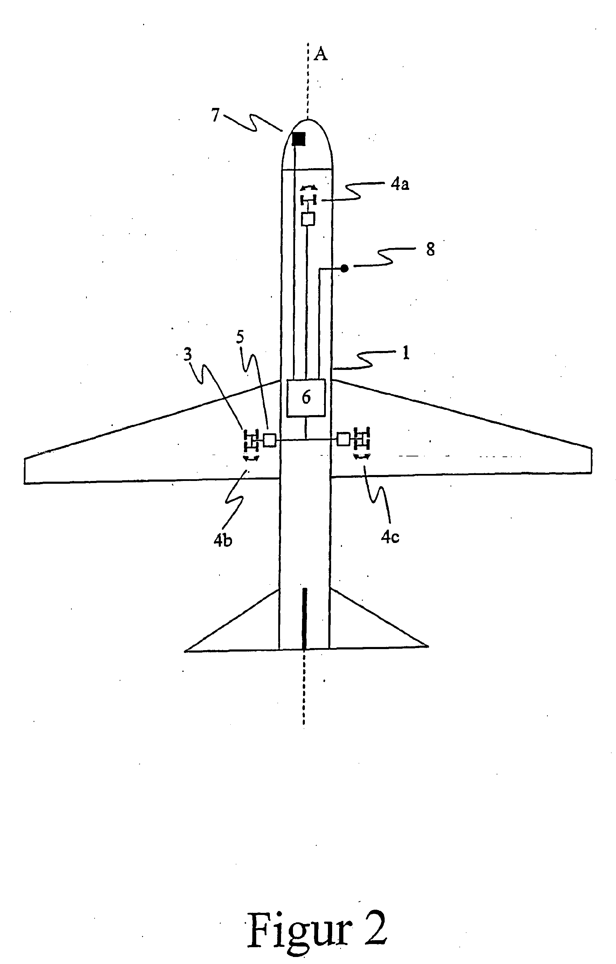

Fig. 2 zeigt schematisch ein Blockschaltbild der vorliegenden Steuervorrichtung, mit deren Hilfe das Flugzeug 1 nach der Landung auf der Landebahn entsprechend auf die Landebahnmitte geführt werden kann. Das Flugzeug 1 weist ein Bugfahrwerk 4a sowie ein Heckfahrwerk 4b, 4c auf, wobei an jedem Fahrwerk 4a, 4b, 4c ein oder mehrere Fahrwerksräder 3 angeordnet sind. Die Fahrwerke 4a, 4b, 4c sind dabei mit einem Steuermechanismus 5 verbunden, mit deren Hilfe die Fahrwerke 4a, 4b, 4c gedreht werden können, d.h. die Laufrichtung der Fahrwerksräder 3 wird gegenüber Längsachse A geschwenkt bzw. gedreht.

Der Steuermechanismus 5 kann dabei beispielsweise ein Aktor sein, der oberhalb des Federbeins an der Drehmomentstütze angeordnet ist und mit der Drehmomentstütze mechanisch derart verbunden ist, dass er das gesamte Federbein des entsprechenden Fahrwerks 4a, 4b, 4c mitsamt den an dem jeweiligen Fahrwerk 4a, 4b, 4c angeordneten Fahrwerksrädern 3 gegenüber der Längsachse A des Flugzeuges 1 dreht. Der Aktor kann dabei ein mechanischer Aktor sein, beispielsweise ein Elektromotor, aber auch ein hydraulischer oder ein ähnlich gelagerter Aktuator. Die Aktuatoren können aber auch so angeordnet sein, dass sie lediglich den Radsatz insgesamt oder individuell einzelne Räder drehen können.

Die Steuermechanismen 5 sind darüber hinaus mit der Ausrichteinheit 6 verbunden, die die Steuerung der Drehung der Fahrwerksräder 3 bzw. Fahrwerke 4a, 4b, 4c mittels des Steuermechanismus 5 umsetzt. Dazu werden die Steuermechanismen 5 entsprechend von der Ausrichteinheit 6 angesteuert und richten die Laufrichtung der Fahrwerksräder 3 entsprechend auf den Fixpunkt bzw. einen um den Kompensationswinkel unterhalb des unkorrigierten Fixpunktes liegenden korrigierten Fixpunkt aus.

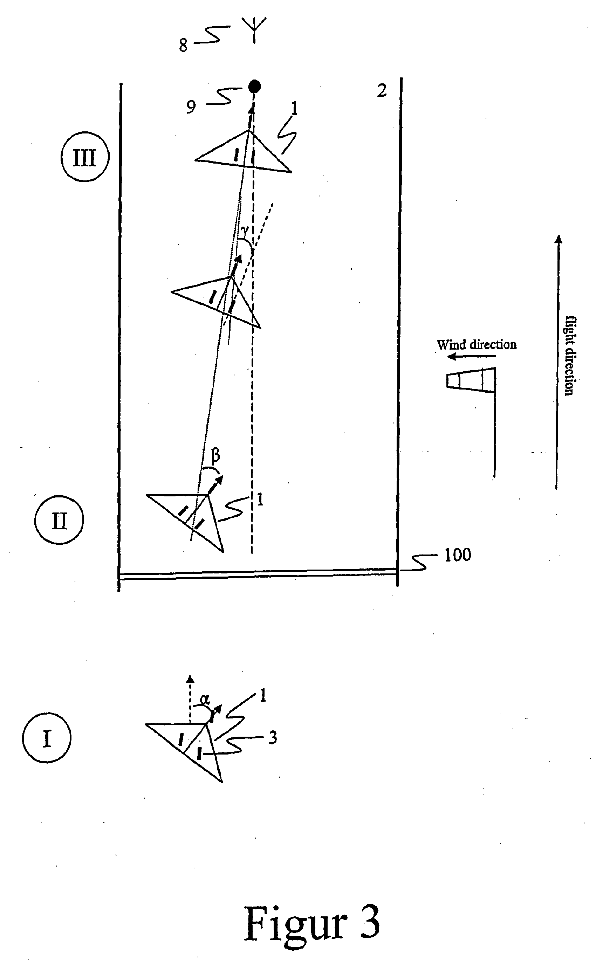

Zur Ermittlung des Fixpunktes weist das Flugzeug des Weiteren eine Signalerfassungseinrichtung 7 auf, die ein von einem Sender (8, Fig. 3) ausgesendetes elektromagnetisches Signal, beispielsweise das so genannte Lokalisierungs-signal des ILS empfängt und somit die Lage des Fixpunktes in Abhängigkeit des erfassten elektromagnetischen Signals ermittelt. Bei dem Lokalisierungssignal des ILS-Signal handelt es sich um ein Führungssignal in der Horizontalebene, welches von einem Sender (8, Fig. 3) ausgesendet wird, der mittig hinter dem Ende der Landebahn 2 angeordnet ist. Somit markiert das Lokalisierungssignal des ILS beständig die Center Line der Landebahn 2. Da dieses Lokalisierungssignal des ILS auf nahezu jedem Flughafen und jeder Landebahn vorhanden ist, kann mit relativ einfachen Mitteln hier der Fixpunkt, der mittig am Ende der Landebahn angenommen wird, ermittelt werden.

Eine andere Möglichkeit, um die Lage des Fixpunktes ermitteln zu können, besteht darin, mit Hilfe einer Positionsermittlungseinheit 8 hoch genau die Position des Flugzeuges 1 zu ermitteln. Dazu bietet sich beispielsweise D-GPS an, welches auf wenige Zentimeter genau die Position ermitteln kann. Unter Kenntnis der GPS-Koordinaten des Fixpunktes der entsprechenden Landebahn 2 sowie dem Vorhaltewinkel α, d.h. mit der Ausrichtung des Flugzeuges gegenüber seiner tatsächlichen Bewegungsrichtung lässt sich dann die Lage des Fixpunktes relativ zu dem Flugzeug 1 und seiner Längsachse A berechnen, so dass in Abhängigkeit dieser Relativlage die Ausrichteinheit 6 die Steuermechanismen 5 entsprechend ansteuern kann, um so die Fahrwerke 4a, 4b, 4c und deren daran angeordneten Fahrwerksrädern 3 entsprechend auf den Fixpunkt bzw. auf einen um den Kompensationswinkel unterhalb des unkorrigierten Fixpunktes liegenden korrigierten Fixpunkt auszurichten.

Letztlich ist die Ausrichteinheit 6 derart eingerichtet, dass sie in Abhängigkeit der Ausrichtung der Längsachse A des Flugzeuges 1, die aufgrund eines beispielsweise vorhandenen Vorhaltewinkels α sich von der Bewegungsrichtung des Flugzeuges 1 über Grund unterscheiden kann, die Lage des Fixpunktes relativ zu dieser Längsachse A ermittelt, um so die Fahrwerksräder 3 entsprechend auf diesen Fixpunkt bzw. einen um einen Kompensationswinkel unterhalb des unkorrigierten Fixpunktes liegenden korrigierten Fixpunkt auszurichten. Dazu werden die Fahrwerksräder 3 relativ zu der Längsachse A des Flugzeuges 1 geschwenkt.

Fig. 3 zeigt schematisch die Landung eines Flugzeuges 1 mit Hilfe der vorliegenden Steuervorrichtung. Die bereits in Fig. 1 dargestellten Landephasen I, II und III werden dabei beibehalten. Wie zu erkennen ist, folgt der Anflug auf die Landebahn 2 unter Seitenwind, so dass das Flugzeug einen entsprechenden Vorhaltewinkel oder Crabwinkel α aufweist, um die Abdrift durch den Seitenwind zu kompensieren. Die an dem Flugzeug angeordneten Fahrwerksräder 3 sind dabei auf den um einen Kompensationswinkel unterhalb des Fixpunktes 9 (der sich mittig am Ende der Landebahn 2 befindet) liegenden korrigierten Fixpunkt ausgerichtet. Da das System kontinuierlich die Lage des Fixpunktes 9 in Bezug auf die Längsachse A des Flugzeuges 1 ermittelt, werden die Fahrwerksräder 3 auch ständig auf diesen um einen Kompensationswinkel unterhalb des Fixpunktes 9 liegenden korrigierten Fixpunkt hin neu ausgerichtet, so dass sie während der kompletten Landephase auf diesen um den Kompensationswinkel unterhalb des Fixpunktes 9 liegenden korrigierten Fixpunkt ausgerichtet sind. Die Ausrichtung der Fahrwerksräder 3 auf den um den Kompensationswinkel unterhalb des Fixpunktes 9 liegenden korrigierten Fixpunkt erfolgt dabei bereits schon während der Anflugphase I.

Setzt das Flugzeug nun in Phase II hinter der Landebahnschwelle 100 auf der Landebahn 2 auf, so beginnt die sofortige Führung des Flugzeuges 1 in Richtung des Fixpunktes 9 hin, da die Fahrwerksräder bereits zu dem um einen Kompensationswinkel unterhalb des Fixpunktes 9 liegenden korrigierten Fixpunkt hin ausgerichtet sind. Zu erkennen ist hierbei, dass die Fahrzeugräder 3 dabei nicht parallel zur Landebahn 2 bzw. zur Bewegungsrichtung des Flugzeuges 1 über Grund ausgerichtet sind, so dass insbesondere im Moment des Aufsetzens des Flugzeuges 1 entsprechende (wenn auch kleine) Querkräfte auf das Hauptfahrwerk wirken.

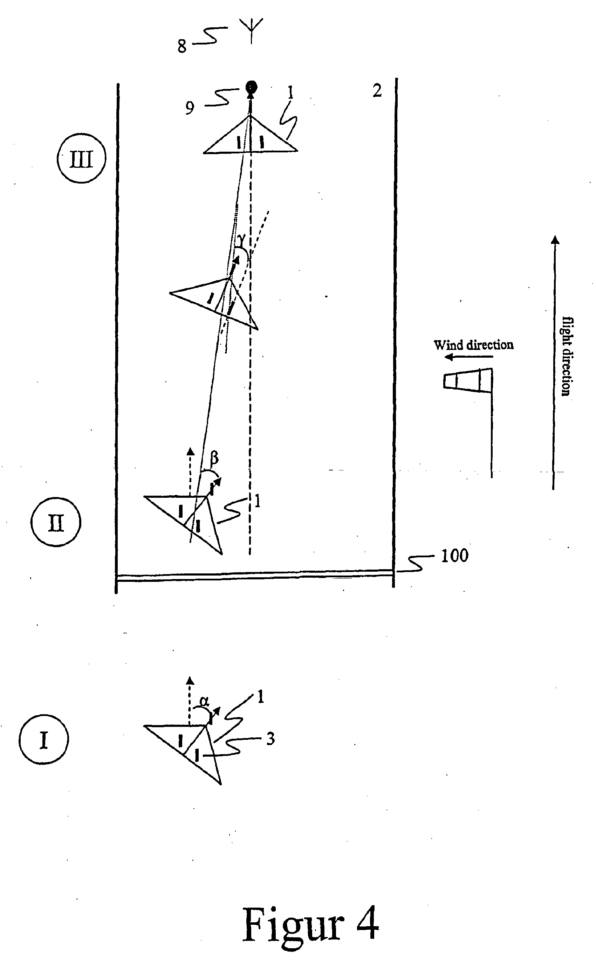

Hat das Flugzeug 1 nun vollständig aufgesetzt, so erfolgt in Phase III der Abbrems- und Ausrollvorgang, wobei aufgrund der Ausrichtung der Fahrwerksräder in Richtung des um einen Kompensationswinkel unterhalb des Fixpunktes 9 liegenden korrigierten Fixpunkt hin, das Flugzeug 1 am Ende des Ausrollvorgangs und vor Beginn des Taxiweges sich mittig auf der Landebahnmitte (Center Line) befindet. Dabei ist die Ausrichteinheit 6, wie sie in Fig. 2 gezeigt wurde, derart eingerichtet, dass sie die Fahrwerksräder mittels des Steuermechanismus 5 derart dreht, dass am Ende des Ausrollvorgangs III sich das Flugzeug nicht nur in der Mitte der Landebahn befindet, sondern das Flugzeug 1 auch parallel zur Landebahn ausgerichtet ist und alle Fahrwerksräder ebenfalls parallel zur Landebahn 2 ausgerichtet sind (Figur 4).

Damit trägt die erfindungsgemäße Steuervorrichtung maßgeblich zur Sicherheit während der Lande- und Startphase eines Flugzeuges bei.

Fig. 4 zeigt schematisch ebenfalls einen Landevorgang mittels der vorliegenden Steuervorrichtung, jedoch werden die Fahrwerksräder 3 erst nach dem Aufsetzen in Phase II auf den um einen Kompensationswinkel unterhalb des Fixpunktes 9 liegenden korrigierten Fixpunkt ausgerichtet. In der Anflugphase I werden die Fahrwerksräder 3 aufgrund des Vorhaltewinkels α in Bewegungsrichtung des Flugzeuges 1 über Grund ausgerichtet, so dass während des Aufsetzens in Phase II des Flugzeuges 1 auf der Landebahnschwelle 100 an dem Fahrwerk keinerlei kritische Querkräfte wirken.

Kurz nach dem Aufsetzen in Phase II werden dann allerdings die Fahrwerksräder 3 auf den um einen Kompensationswinkel unterhalb des Fixpunktes 9 liegenden korrigierten Fixpunkt hin ausgerichtet, so dass das Flugzeug dann eine in Richtung des um einen Kompensationswinkel unterhalb des Fixpunktes 9 liegenden korrigierten Fixpunkt hin führende Führung erhält und somit in Richtung Landebahnmitte geführt wird. Die dabei entstehenden Querkräfte oder Gierkräfte sind dabei geringer als diejenigen, die während des Aufsetzens des Flugzeuges in Phase II entstehen, wenn die Fahrwerksräder auf den um einen Kompensationswinkel unterhalb des Fixpunktes 9 liegenden korrigierten Fixpunkt ausgerichtet sind.

Am Ende des Ausrollvorgangs III befindet sich das Flugzeug 1 dann mittig der Landebahn, wobei sowohl das Flugzeug als auch die Fahrwerksräder parallel zur Landebahn 2 ausgerichtet sind.

Dabei ist es beispielsweise denkbar, dass während der Führung des Flugzeuges auf den um einen Kompensationswinkel unterhalb des Fixpunktes 9 liegenden korrigierten Fixpunkt hin aufgrund der schlechten Fahrbahnbedingungen eines oder mehrerer der Fahrwerksräder 3 zu rutschen beginnen, so dass von Haftreibung in die Gleitreibung überbegangen wird. In diesem kritischen Moment wird die Ausrollphase III dann sicherheitskritisch, da das Flugzeug 1 instabil wird. Um diesen Zustand wieder aufzuheben, ist es denkbar, dass die Fahrwerksräder 3 kurzzeitig in Rutschrichtung gelenkt werden, so dass die rutschenden Räder von der Gleitreibung wieder zurück in die Haftreibung gelangen können, um dann erneut das Flugzeug in Richtung Fixpunkt 9 zu führen. Denkbar ist aber auch, dass durch asymmetrisches Bremsen bzw. Anbremsen der Fahrwerksräder 3 Giermomente erzeugt werden, die zur Führung des Flugzeuges, z. B. hin auf den um einen Kompensationswinkel unterhalb des Fixpunktes 9 liegenden korrigierten Fixpunkt, benutzt werden können.

Alle Steuermanöver werden bei Bedarf durch geeignete Quer- und Seitenrudereingaben unterstützt.

## Patentansprüche

1. Steuervorrichtung für Flugzeuge (1) umfassend mindestens ein an einem Flugzeug (1) angeordnetes Flugzeugfahrwerk (4a, 4b, 4c), das ein oder mehrere Fahrwerksräder (3) aufweist, und einen mit dem Flugzeugfahrwerk (4a, 4b, 4c) zusammenwirkenden Steuermechanismus (5), der zum Drehen der Fahrwerksräder (3) gegenüber der Längsachse (A) des Flugzeuges (1) eingerichtet ist, **dadurch gekennzeichnet, dass** die Steuervorrichtung eine Ausrichteinheit (6) hat, die mit dem Steuermechanismus (5) verbunden und zur Steuerung der Drehung der Fahrwerksräder (3) mittels des Steuermechanismus (5) während zumindest eines Teils der Lande- oder Startphase (I, II, III) des Flugzeuges (1) derart eingerichtet ist, dass die Laufrichtung der Fahrwerksräder (3) in Richtung eines Fixpunktes (9) ausgerichtet sind.

2. Steuervorrichtung nach Anspruch 1, **dadurch gekennzeichnet, dass** das Flugzeugfahrwerk (4a, 4b, 4c) mindestens ein Federbein aufweist, an deren unterem Ende die ein oder mehreren Fahrwerksräder angeordnet und die über eine Drehmomentstütze mit dem Flugzeug (1) mechanisch verbunden sind, wobei der Steuermechanismus (5) mit der Drehmomentstütze mechanisch derart zusammenwirkt, dass das Federbein durch Drehen der Drehmomentstütze gedreht und die Laufrichtung der an dem Federbein angeordneten Fahrwerksräder (3) gegenüber der Längsachse (A) geschwenkt werden.

3. Steuervorrichtung nach Anspruch 1 oder 2, **gekennzeichnet durch** einen am Ende einer Lande- oder Startbahn (2) vorzugsweise mittig auf der Lande- oder Startbahn (2) liegenden Fixpunkt (9).

4. Steuervorrichtung nach einem der vorhergehenden Ansprüche, **dadurch gekennzeichnet, dass** die Ausrichteinheit (6) zum kontinuierlichen Ausrichten der Fahrwerksräder (3) während der gesamten Lande- oder Startphase (I, II, III) des Flugzeuges (1) eingerichtet ist.

5. Steuervorrichtung nach einem der vorhergehenden Ansprüche, **dadurch gekennzeichnet, dass** die Ausrichteinheit (6) zum Ermitteln der Lage des Fixpunktes (9) relativ zur Längsachse (A) des Flugzeuges (1) ausgebildet und zum Drehen der Fahrwerksräder (3) mittels des Steuermechanismus (5) in Abhängigkeit der ermittelten relativen Lage (β) des Fixpunktes (9) eingerichtet ist.

6. Steuervorrichtung nach einem der vorhergehenden Ansprüche, **dadurch gekennzeichnet, dass** die Steuervorrichtung eine Signalerfassungseinrichtung (7) hat, die zum Erfassen eines den Fixpunkt (9) markierenden elektromagnetischen Signals (ILS) ausgebildet und zur Ermittlung der Lage des Fixpunktes (9) in Abhängigkeit des erfassten elektromagnetischen Signals (ILS) eingerichtet ist.

7. Steuervorrichtung nach einem der vorhergehenden Ansprüche, **dadurch gekennzeichnet, dass** die Steuervorrichtung eine hochgenaue Positionsermittlungseinheit (8) hat, die zur Ermittlung der Position des Flugzeuges (1) eingerichtet ist, wobei die Ausrichteinheit (6) zur Ermittlung der Lage des Fixpunktes (9) in Abhängigkeit der ermittelten Position des Flugzeuges eingerichtet ist.

8. Steuervorrichtung nach einem der Ansprüche 1 bis 7, **dadurch gekennzeichnet, dass** die Ausrichteinheit (6) zum Ausrichten der Laufrichtung aller Fahrwerksräder (3) einer Fahrwerksanlage des Flugzeuges (1) in Richtung des Fixpunktes (9) durch Drehen der Fahrwerksräder (3) mittels des Steuermechanismus (5) eingerichtet ist.

9. Steuervorrichtung nach einem der vorhergehenden Ansprüche, **dadurch gekennzeichnet, dass** der Steuermechanismus (5) zur Ausrichtung der Fahrwerksräder (3) um einen Drehwinkel gegenüber der Flugzeuglängsachse (A) in Richtung der Flugzeugbewegung über Grund in Richtung eines Fixpunktes eingerichtet ist, wobei die Ausrichtung der Fahrwerksräder (3) vorzugsweise um einen Korrekturwinkel (γ) zu einem angenommenen Fixpunkt reduziert zur Kompensation der während des Brems- und Ausrollvorganges seitlich auf das Flugzeug wirkenden Windkraft erfolgt.

10. Steuervorrichtung nach einem der vorhergehenden Ansprüche, **dadurch gekennzeichnet, dass** die Ausrichteinheit (6) derart eingerichtet ist, dass alle in Richtung des Fixpunkts (9) ausgerichteten Fahrwerksräder (3) des Hauptfahrwerkes parallel ausgerichtet sind.

11. Steuervorrichtung nach einem der vorhergehenden Ansprüche, **dadurch gekennzeichnet, dass** die Ausrichteinheit (6) nach dem Aufsetzen (II) des Flugzeuges (1) zum Drehen der Fahrwerksräder (3) mittels des Steuermechanismus (5) derart eingerichtet ist, dass die Längsachse (A) des Flugzeuges (1) während des Ausrollvorgangs (III) parallel zu den Fahrwerksrädern (3) ausgerichtet wird.

12. Steuervorrichtung nach einem der vorhergehenden Ansprüche, **dadurch gekennzeichnet, dass** die Ausrichteinheit (6) nach dem Aufsetzen (II) des Flugzeuges derart eingerichtet ist, dass der Schwerpunkt des Flugzeuges in Richtung der Landebahnmitte gesteuert wird.

## Claims

1. Control device for aircraft (1) comprising at least one aircraft undercarriage (4a, 4b, 4c) arranged on an aircraft (1), which aircraft undercarriage has one or more undercarriage wheels (3), and comprising a control mechanism (5) which interacts with the aircraft undercarriage (4a, 4b, 4c) and which is set up to turn the undercarriage wheels (3) relative to the longitudinal axis (A) of the aircraft (1), **characterized in that** the control device has an alignment unit (6) which is connected to the control mechanism (5) and which is set up to control the turning of the undercarriage wheels (3) by means of the control mechanism (5) during at least one part of the landing or take-off phase (I, II, III) of the aircraft (1), in such a way that the running direction of the undercarriage wheels (3) is aligned in the direction of a fixed point (9).

2. Control device according to Claim 1, **characterized in that** the aircraft undercarriage (4a, 4b, 4c) has at least one spring strut, on the lower end of which the one or more undercarriage wheels are arranged and which are mechanically connected to the aircraft (1) via a torque support, wherein the control mechanism (5) interacts mechanically with the torque support such that the spring strut is turned as a result of turning of the torque support, and the running direction of the undercarriage wheels (3) arranged on the spring strut is pivoted relative to the longitudinal axis (A).

3. Control device according to Claim 1 or 2, **characterized by** a fixed point (9) which is situated at the end of a landing or take-off runway (2), preferably centrally on the landing or take-off runway (2).

4. Control device according to one of the preceding claims, **characterized in that** the alignment unit (6) is set up to align the undercarriage wheels (3) continuously throughout the landing or take-off phase (I, II, III) of the aircraft (1).

5. Control device according to one of the preceding claims, **characterized in that** the alignment unit (6) is designed to determine the position of the fixed point (9) relative to the longitudinal axis (A) of the aircraft (1) and is set up to turn the undercarriage wheels (3) by means of the control mechanism (5) as a function of the determined relative position (β) of the fixed point (9).

6. Control device according to one of the preceding claims, **characterized in that** the control device has a signal detection device (8) which is set up to detect an electromagnetic signal (ILS) which marks the fixed point (9) and to determine the position of the fixed point (9) as a function of the detected electromagnetic signal (ILS).

7. Control device according to one of the preceding claims, **characterized in that** the control device has a highly accurate position determining unit (8) which is set up to determine the position of the aircraft (1), wherein the alignment unit (6) is set up to determine the position of the fixed point (9) as a function of the determined position of the aircraft.

8. Control device according to one of Claims 1 to 7, **characterized in that** the alignment unit (6) is set up to align the running direction of all of the undercarriage wheels (3) of an undercarriage system of the aircraft (1) in the direction of the fixed point (9) by turning the undercarriage wheels (3) by means of the control mechanism (5).

9. Control device according to one of the preceding claims, **characterized in that** the control mechanism (5) is set up to align the undercarriage wheels (3) through a turn angle relative to the aircraft longitudinal axis (A) in the direction of the aircraft movement over ground in the direction of a fixed point, wherein the alignment of the undercarriage wheels (3) is performed preferably with a reduction by a corrective angle (γ) with respect to an assumed fixed point in order to compensate for the wind force acting laterally on the aircraft during braking and roll-out.

10. Control device according to one of the preceding claims, **characterized in that** the alignment unit (6) is set up such that all of the undercarriage wheels (3), which are aligned in the direction of the fixed point (9), of the main undercarriage are aligned in parallel.

11. Control device according to one of the preceding claims, **characterized in that** the alignment unit (6) is set up to turn the undercarriage wheels (3) by means of the control mechanism (5) after touchdown (II) of the aircraft (1) such that the longitudinal axis (A) of the aircraft (1) is aligned parallel to the undercarriage wheels (3) during roll-out (III).

12. Control device according to one of the preceding claims, **characterized in that** the alignment unit (6) is set up such that, after touchdown (II) of the aircraft, the center of gravity of the aircraft is moved in a controlled manner in the direction of the center of the runway.

## Revendications

1. Dispositif de commande pour avions (1) comprenant au moins un train d'atterrissage (4a, 4b, 4c) disposé sur un avion (1), qui présente une ou plusieurs roues de train d'atterrissage (3), et un mécanisme de commande (5) coopérant avec le train d'atterrissage (4a, 4b, 4c), lequel est prévu pour faire tourner les roues de train d'atterrissage (3) par rapport à l'axe longitudinal (A) de l'avion (1), **caractérisé en ce que** le dispositif de commande présente une unité d'orientation (6) qui est connectée au mécanisme de commande (5) et qui est prévue pour la commande de la rotation des roues de train d'atterrissage (3) au moyen du mécanisme de commande (5) pendant au moins une partie de la phase d'atterrissage ou de décollage (I, II, III) de l'avion (1) de manière à ce que la direction d'avance des roues de train d'atterrissage (3) soit orientée dans la direction d'un point fixe (9).

2. Dispositif de commande selon la revendication 1, **caractérisé en ce que** le train d'atterrissage (4a, 4b, 4c) présente au moins une jambe de force à l'extrémité inférieure de laquelle sont disposées la ou les roues de train d'atterrissage qui sont connectées mécaniquement par le biais d'un support de couple à l'avion (1), le mécanisme de commande (5) coopérant mécaniquement avec le support de couple de telle sorte que la jambe de force soit tournée par rotation du support de couple et que la direction d'avance des roues du train d'atterrissage (3) disposées au niveau de la jambe de force soit pivotée par rapport à l'axe longitudinal (A).

3. Dispositif de commande selon la revendication 1 ou 2, **caractérisé par** un point fixe (9) situé à l'extrémité d'une piste d'atterrissage ou de décollage (2) de préférence au milieu de la piste d'atterrissage ou de décollage (2).

4. Dispositif de commande selon l'une quelconque des revendications précédentes, **caractérisé en ce que** l'unité d'orientation (6) est prévue pour orienter en continu les roues du train d'atterrissage (3) pendant toute la phase d'atterrissage ou de décollage (I, II, III) de l'avion (1).

5. Dispositif de commande selon l'une quelconque des revendications précédentes, **caractérisé en ce que** l'unité d'orientation (6) est réalisée pour déterminer la position du point fixe (9) par rapport à l'axe longitudinal (A) de l'avion (1) et est prévue pour faire tourner les roues du train d'atterrissage (3) au moyen du mécanisme de commande (5) en fonction de la position relative déterminée (β) du point fixe (9).

6. Dispositif de commande selon l'une quelconque des revendications précédentes, **caractérisé en ce que** le dispositif de commande présente un dispositif de détection de signaux (7) qui est réalisé pour détecter un signal électromagnétique (ILS) marquant le point fixe (9) et est prévu pour déterminer la position du point fixe (9) en fonction du signal électromagnétique détecté (ILS).

7. Dispositif de commande selon l'une quelconque des revendications précédentes, **caractérisé en ce que** le dispositif de commande présente une unité de détermination de position extrêmement précise (8) qui est prévue pour déterminer la position de l'avion (1), l'unité d'orientation (6) étant prévue pour déterminer la position du point fixe (9) en fonction de la position déterminée de l'avion.

8. Dispositif de commande selon l'une quelconque des revendications 1 à 7, **caractérisé en ce que** l'unité d'orientation (6) est prévue pour orienter la direction d'avance de toutes les roues du train d'atterrissage (3) d'une installation de train d'atterrissage de l'avion (1) dans la direction du point fixe (9) par rotation des roues du train d'atterrissage (3) au moyen du mécanisme de commande (5).

9. Dispositif de commande selon l'une quelconque des revendications précédentes, **caractérisé en ce que** le mécanisme de commande (5) est prévu pour orienter les roues du train d'atterrissage (3) suivant un angle de rotation par rapport à l'axe longitudinal de l'avion (A) dans la direction du déplacement de l'avion au sol dans la direction d'un point fixe, l'orientation des roues du train d'atterrissage (3) s'effectuant de préférence de manière réduite d'un angle de correction (γ) par rapport à un point fixe hypothétique pour compenser la force du vent agissant latéralement sur l'avion pendant l'opération de freinage et de refoulement.

10. Dispositif de commande selon l'une quelconque des revendications précédentes, **caractérisé en ce que** l'unité d'orientation (6) est prévue de telle sorte que toutes les roues du train d'atterrissage (3) du train d'atterrissage principal orientées dans la direction du point fixe (9) soient orientées parallèlement.

11. Dispositif de commande selon l'une quelconque des revendications précédentes, **caractérisé en ce que** l'unité d'orientation (6), après la pose (II) de l'avion (1), est prévue pour faire tourner les roues du train d'atterrissage (3) au moyen du mécanisme de commande (5) de telle sorte que l'axe longitudinal (A) de l'avion (1) soit orienté pendant l'opération de refoulement (III) parallèlement aux roues du train d'atterrissage (3).

12. Dispositif de commande selon l'une quelconque des revendications précédentes, **caractérisé en ce que** l'unité d'orientation (6) après la pose (II) de l'avion est prévue de telle sorte que le centre de gravité de l'avion soit commandé dans la direction du centre de la piste d'atterrissage.
